# EUROPEAN PATENT APPLICATION

(11) **EP 4 772 547 A1**
(43) Date of publication of application: **08.07.2026**
(21) Application number: 24872046.8
(22) Date of filing: 19.09.2024
(51) Int. Cl.: C08F 20/06, C08F 2/32

(54) **METHOD FOR PRODUCING WATER ABSORBENT RESIN PARTICLES, AND METHOD FOR CONTROLLING PARTICLE DIAMETERS OF WATER ABSORBENT RESIN PARTICLES**

(30) Priority: 29.09.2023 JP 2023170477
(71) Applicant: Sumitomo Seika Chemicals Co., Ltd., Kako-gun, Hyogo 675-0145 (JP)
(72) Inventor: MATSUI, Sahomi, Himeji-shi, Hyogo 672-8076 (JP)
(74) Representative: Hasegawa, Kan
(86) International application number: PCT/JP2024/033526
(87) International publication number: WO 2025/070255

(57) **Abstract**

A method for producing water-absorbent resin particles is disclosed, the method including: preparing an aqueous solution that includes monomers including at least one (meth)acrylic acid compound of (meth)acrylic acid or a salt thereof, an alcohol compound having 1 or more and 10 or less carbon atoms, and water; forming a particulate hydrogel polymer including a polymer of the monomers and water by reverse phase suspension polymerization in a reaction solution including the aqueous solution and a dispersion medium; and recovering water-absorbent resin particles including the polymer from the reaction solution. The aqueous solution including the alcohol compound in an amount of 800 ppm by mass or less with respect to an amount of the (meth)acrylic acid compound is prepared.

## Description

### Technical Field

The present disclosure relates to a method for producing water-absorbent resin particles, and a method for controlling particle diameters of water-absorbent resin particles.

### Background Art

A water-absorbent resin is produced in a state of particles, and is widely used in various fields such as sanitary materials such as paper diapers and hygiene products, horticultural materials such as water retention agents and soil improvement agents, and industrial materials such as waterproofing materials and condensation prevention agents.

In such water-absorbent resin particles, it is required that the ratio of particles having excessively large particle diameters is small (for example, Patent Literature 1).

### Citation List

### Patent Literature

[Patent Literature 1] International Publication No. WO 2012/081355

### Summary of Invention

### Technical Problem

In a case where water-absorbent resin particles are obtained by reverse phase suspension polymerization, a trace amount of impurities included in an aqueous solution may cause formation of coarse particles in which a large number of primary particles are linked in a chain, depending on polymerization conditions. As a result, the ratio of coarse particles having an excessively large particle diameter sometimes increased.

The present disclosure relates to suppressing the formation of chain-like coarse particles in which primary particles are linked in the production of water-absorbent resin particles by reverse phase suspension polymerization.

### Solution to Problem

The present disclosure includes the followings.
[1] A method for producing water-absorbent resin particles, the method including:
   preparing an aqueous solution that includes monomers including at least one (meth)acrylic acid compound of (meth)acrylic acid or a salt thereof, an alcohol compound having 1 or more and 10 or less carbon atoms, and water;
   forming a particulate hydrogel polymer including a polymer of the monomers and water by reverse phase suspension polymerization in a reaction solution including the aqueous solution and a dispersion medium; and
   recovering water-absorbent resin particles including the polymer from the reaction solution,
   in which the aqueous solution including the alcohol compound in an amount of 800 ppm by mass or less with respect to an amount of the (meth)acrylic acid compound is prepared, and
   in a case where the aqueous solution includes the salt of (meth)acrylic acid, the amount of the (meth)acrylic acid compound is a total amount of an amount of the (meth)acrylic acid and an amount of (meth)acrylic acid corresponding to an amount of substance of the salt.
[2] The method according to [1], further including:
   preparing a (meth)acrylic acid raw material that includes (meth)acrylic acid and an alcohol compound having 1 or more and 10 or less carbon atoms and is transported such that an amount of the alcohol compound is 800 ppm by mass or less with respect to an amount of the (meth)acrylic acid,
   in which the aqueous solution is prepared from the (meth)acrylic acid raw material.
[3] The method according to [1] or [2],
   in which the water-absorbent resin particles include spherical primary particles.
[4] The method according to any one of [1] to [3],
   in which the alcohol compound includes at least one selected from isononyl alcohol, 1-butanol, and isopropyl alcohol.

### Advantageous Effects of Invention

According to the present disclosure, it is possible to suppress the formation of chain-like coarse particles in which primary particles are linked in the production of water-absorbent resin particles by reverse phase suspension polymerization.

### Brief Description of Drawings

FIG. 1 is a scanning electron microscope (SEM) image showing an example of water-absorbent resin particles.
FIG. 2 is an SEM image showing an example of water-absorbent resin particles including chain-like coarse particles.
FIG. 3 is an SEM image showing an example of water-absorbent resin particles including chain-like coarse particles.
FIG. 4 is an SEM image showing an example of water-absorbent resin particles including chain-like coarse particles.

### Description of Embodiments

The present invention is not limited to the following examples. In the present specification, (meth)acrylic acid means acrylic acid, methacrylic acid, and a combination thereof.

An example of a method for producing the water-absorbent resin particles includes preparing an aqueous solution that includes monomers including at least one (meth)acrylic acid compound of (meth)acrylic acid or a salt thereof, an alcohol compound having 1 or more and 10 or less carbon atoms, and water; forming a particulate hydrogel polymer including a polymer of the monomers and water by reverse phase suspension polymerization in a reaction solution including the aqueous solution and a dispersion medium; and recovering water-absorbent resin particles including the polymer from the reaction solution.

The reaction solution for reverse phase suspension polymerization can be formed by stirring a mixed solution including the aqueous solution and the dispersion medium. According to the findings of the present inventors, an amount of the alcohol compound having 1 or more and 10 or less carbon atoms included in the aqueous solution is related to a degree of formation of the chain-like coarse particles in which the primary particles are linked in the water-absorbent resin particles recovered from the reaction solution. Therefore, in the aqueous solution before forming the reaction solution, the amount of the alcohol compound having 1 or more and 10 or less carbon atoms is adjusted to be 800 ppm by mass or less with respect to the amount of the (meth)acrylic acid compound. In a case where the amount of the alcohol compound having 1 or more and 10 or less carbon atoms is 800 ppm by mass or less, it is possible to stably produce water-absorbent resin particles having a small ratio of chain-like coarse particles. From the same viewpoint, the amount of the alcohol compound having 1 or more and 10 or less carbon atoms in the prepared aqueous solution may be 750 ppm by mass or less, 700 ppm by mass or less, 650 ppm by mass or less, 600 ppm by mass or less, 550 ppm by mass or less, 500 ppm by mass or less, 450 ppm by mass or less, 400 ppm by mass or less, 360 ppm by mass or less, 320 ppm by mass or less, 280 ppm by mass or less, 240 ppm by mass or less, 200 ppm by mass or less, 180 ppm by mass or less, 160 ppm by mass or less, 140 ppm by mass or less, 120 ppm by mass or less, or 100 ppm by mass or less with respect to the amount of the (meth)acrylic acid compound. The amount of the alcohol compound having 1 or more and 10 or less carbon atoms in the prepared aqueous solution may be more than 0 ppm by mass, and may be 1 ppm by mass or more, 5 ppm by mass or more, or 10 ppm by mass or more, with respect to the amount of the (meth)acrylic acid compound.

The amount of the alcohol compound having 1 or more and 10 or less carbon atoms in the prepared aqueous solution may be more than 0 ppm by mass, and 800 ppm by mass or less, 750 ppm by mass or less, 700 ppm by mass or less, 650 ppm by mass or less, 600 ppm by mass or less, 550 ppm by mass or less, 500 ppm by mass or less, 450 ppm by mass or less, 400 ppm by mass or less, 360 ppm by mass or less, 320 ppm by mass or less, 280 ppm by mass or less, 240 ppm by mass or less, 200 ppm by mass or less, 180 ppm by mass or less, 160 ppm by mass or less, 140 ppm by mass or less, 120 ppm by mass or less, or 100 ppm by mass or less with respect to the amount of the (meth)acrylic acid compound.

The amount of the alcohol compound having 1 or more and 10 or less carbon atoms in the prepared aqueous solution may be 1 ppm by mass or more, and 800 ppm by mass or less, 750 ppm by mass or less, 700 ppm by mass or less, 650 ppm by mass or less, 600 ppm by mass or less, 550 ppm by mass or less, 500 ppm by mass or less, 450 ppm by mass or less, 400 ppm by mass or less, 360 ppm by mass or less, 320 ppm by mass or less, 280 ppm by mass or less, 240 ppm by mass or less, 200 ppm by mass or less, 180 ppm by mass or less, 160 ppm by mass or less, 140 ppm by mass or less, 120 ppm by mass or less, or 100 ppm by mass or less with respect to the amount of the (meth)acrylic acid compound.

The amount of the alcohol compound having 1 or more and 10 or less carbon atoms in the prepared aqueous solution may be 5 ppm by mass or more, and 800 ppm by mass or less, 750 ppm by mass or less, 700 ppm by mass or less, 650 ppm by mass or less, 600 ppm by mass or less, 550 ppm by mass or less, 500 ppm by mass or less, 450 ppm by mass or less, 400 ppm by mass or less, 360 ppm by mass or less, 320 ppm by mass or less, 280 ppm by mass or less, 240 ppm by mass or less, 200 ppm by mass or less, 180 ppm by mass or less, 160 ppm by mass or less, 140 ppm by mass or less, 120 ppm by mass or less, or 100 ppm by mass or less with respect to the amount of the (meth)acrylic acid compound.

The amount of the alcohol compound having 1 or more and 10 or less carbon atoms in the prepared aqueous solution may be 10 ppm by mass or more, and 800 ppm by mass or less, 750 ppm by mass or less, 700 ppm by mass or less, 650 ppm by mass or less, 600 ppm by mass or less, 550 ppm by mass or less, 500 ppm by mass or less, 450 ppm by mass or less, 400 ppm by mass or less, 360 ppm by mass or less, 320 ppm by mass or less, 280 ppm by mass or less, 240 ppm by mass or less, 200 ppm by mass or less, 180 ppm by mass or less, 160 ppm by mass or less, 140 ppm by mass or less, 120 ppm by mass or less, or 100 ppm by mass or less with respect to the amount of the (meth)acrylic acid compound.

In a case where the aqueous solution includes a salt of (meth)acrylic acid, the amount of the (meth)acrylic acid compound as a reference for the amount of the alcohol compound having 1 or more and 10 or less carbon atoms is a total amount of an amount of the (meth)acrylic acid and an amount of (meth)acrylic acid corresponding to an amount of substance of the salt of (meth)acrylic acid. The amount of (meth)acrylic acid corresponding to the amount of substance of the salt of the (meth)acrylic acid compound means an amount of (meth)acrylic acid that is the same as the amount of substance of the salt of the (meth)acrylic acid. In a case where the aqueous solution includes two or more kinds of alcohol compounds having 1 or more and 10 or less carbon atoms, the aqueous solution is prepared such that the total amount of the alcohol compounds is within the above-mentioned range.

Examples of the alcohol compound having 1 or more and 10 or less carbon atoms, which can be included in the aqueous solution, include isononyl alcohol, 1-butanol, isopropyl alcohol, 1,3-butanediol, 1,4-butanediol, propylene glycol, cyclohexanol, methyl t-butyl alcohol, 1-octanol, and isobutyl alcohol. The alcohol compound having 1 or more and 10 or less carbon atoms may be used alone or in combination with two or more kinds thereof.

The aqueous solution may include (meth)acrylic acid and a salt of (meth)acrylic acid as the (meth)acrylic acid compound. The ratio of the salt of (meth)acrylic acid may be, for example, 50% by mole or more and 100% by mole or less, based on the total amount of the (meth)acrylic acid compound. The salt of (meth)acrylic acid may be, for example, an alkali metal salt of (meth)acrylic acid. The alkali metal salt of (meth)acrylic acid may be a sodium salt.

The aqueous solution can be prepared, for example, by a method including preparing a (meth)acrylic acid raw material including (meth)acrylic acid and an alcohol compound having 1 or more and 10 or less carbon atoms, and neutralizing a part of the (meth)acrylic acid in the (meth)acrylic acid raw material with an alkaline aqueous solution including a basic compound. The basic compound may be an alkali metal hydroxide (for example, sodium hydroxide).

The (meth)acrylic acid raw material may be transported such that the amount of the alcohol compound having 1 or more and 10 or less carbon atoms is 800 ppm by mass or less with respect to the amount of the (meth)acrylic acid. In a case where a transport container (for example, an ISO tank container) in which a (meth)acrylic acid raw material is stored for transport is used for transporting an alcohol compound having 1 or more and 10 or less carbon atoms before the (meth)acrylic acid raw material is stored, a trace amount of the alcohol compound remaining in the transport container may be included in the (meth)acrylic acid raw material even after the inside of the container is appropriately washed. By managing the transport container so that the alcohol compound does not remain in a large amount in the transport container for transporting the (meth)acrylic acid raw material, the amount of the alcohol compound included in the (meth)acrylic acid raw material can be controlled to a range of 800 ppm by mass or less. The amount of the alcohol compound having 1 or more and 10 or less carbon atoms in the (meth)acrylic acid raw material recovered from the transport container may be within the same above-mentioned range as the amount of the alcohol compound with respect to the amount of the (meth)acrylic acid compound in the aqueous solution.

The monomers in the aqueous solution may further include water-soluble ethylenically unsaturated monomers other than the (meth)acrylic acid compound. A ratio of the (meth)acrylic acid compound with respect to the total amount of the monomers may be 60% by mole or more, 70% by mole or more, 80% by mole or more, 90% by mole or more, or 95% by mole or more, and may be substantially 100% by mole. The water-soluble ethylenically unsaturated monomers other than the (meth)acrylic acid compound may include, for example, at least one selected from the group consisting of 2-(meth)acrylamide-2-methylpropanesulfonic acid and an alkali salt thereof, (meth)acrylamide, N,N-dimethyl (meth)acrylamide, 2-hydroxyethyl (meth)acrylate, N-methylol (meth)acrylamide, polyethylene glycol mono(meth)acrylate, N,N-diethylaminoethyl (meth)acrylate, N,N-diethylaminopropyl (meth)acrylate, and diethylaminopropyl (meth)acrylamide.

The aqueous solution may include an internal crosslinking agent that crosslinks a polymer of monomers formed by a polymerization reaction. The internal crosslinking agent may be a compound having two or more reactive functional groups having reactivity with a monomer (in particular, a (meth)acrylic acid compound). The reactive functional group can be, for example, a (meth)acryloyl group, a vinyl group, an epoxy group, a halogen group in a haloepoxy compound, an isocyanate group, or a combination thereof.

Examples of the internal crosslinking agent having two or more (meth)acryloyl groups include a (meth)acrylic acid ester compound formed of a polyol compound and (meth)acrylic acid, an unsaturated polyester formed of a polyol compound and an unsaturated carboxylic acid (maleic acid, fumaric acid, or the like), a bis(meth)acrylamide compound (N,N'-methylene bis(meth)acrylamide or the like), a (meth)acrylic acid ester compound formed of a polyepoxide compound and (meth)acrylic acid, and a (meth)acrylic acid carbamyl ester compound formed of a polyisocyanate compound (tolylene diisocyanate, hexamethylene diisocyanate, or the like) and hydroxyethyl (meth)acrylate. A polyol compound for forming the (meth)acrylic acid ester compound or the unsaturated polyester may be, for example, ethylene glycol, propylene glycol, trimethylolpropane, glycerin, polyoxyethylene glycol, polyoxypropylene glycol, polyglycerin, or a combination thereof.

The vinyl group as a reactive functional group may be a part of an allyl group. Examples of the internal crosslinking agent having two or more vinyl groups (or allyl groups) include allylated starch, allylated cellulose, diallyl phthalate, N,N',N"-triallyl isocyanurate, and divinylbenzene.

Examples of the internal crosslinking agent having two or more epoxy groups include (poly)ethylene glycol diglycidyl ether, (poly)propylene glycol diglycidyl ether, (poly)glycerin diglycidyl ether, (poly)glycerin triglycidyl ether, (poly)propylene glycol polyglycidyl ether, and polyglycerol polyglycidyl ether.

Examples of the internal crosslinking agent having two or more isocyanate groups include 2,4-tolylene diisocyanate and hexamethylene diisocyanate.

The amount of the internal crosslinking agent may be 0 mmol or more and 0.5 mmol or less, 0 mmol or more and 0.2 mmol or less, 0 mmol or more and 0.1 mmol or less, 0 mmol or more and 0.05 mmol or less, or 0 mmol or more and 0.02 mmol or less, and may be substantially 0 mmol, with respect to 1 mol of the monomer.

The aqueous solution may include, as other components, a thickener, a hydrophilic polymer dispersing agent, a radical polymerization initiator, a chain transfer agent, a foaming agent, or a combination thereof.

Examples of the thickener include hydroxyalkyl celluloses such as hydroxyethyl cellulose (HEC) and hydroxypropyl cellulose (HPC); hydroxyalkyl alkyl celluloses such as hydroxyethyl methyl cellulose, hydroxypropyl methyl cellulose, and hydroxyethyl ethyl cellulose; carboxyalkyl celluloses such as carboxymethyl cellulose; and carboxyalkyl hydroxyalkyl celluloses such as carboxymethyl hydroxyethyl cellulose. The thickener may be used alone or in combination with two or more kinds thereof.

The amount of the thickener may be 0.05 parts by mass or more and 20 parts by mass or less, 0.2 parts by mass or more and 10 parts by mass or less, or 0.4 parts by mass or more and 5 parts by mass or less per 100 parts by mass of the monomer.

Examples of the hydrophilic polymer dispersing agent include polyvinyl alcohol (PVA), polyvinylpyrrolidone (PVP), polyethylene glycol (PEG), polypropylene glycol, a polyethylene glycolpolypropylene glycol block copolymer, polyglycerin, polyoxyethylene glycerin, polyoxypropylene glycerin, a polyoxyethylenepolyoxypropylene glycerin copolymer, and a polyoxyethylene sorbitan fatty acid ester. The hydrophilic polymer dispersing agent may be used alone or in combination with two or more kinds thereof.

The amount of the hydrophilic polymer dispersing agent may be 0.001 parts by mass or more and 10 parts by mass or less, 0.005 parts by mass or more and 5 parts by mass or less, 0.01 parts by mass or more and 3 parts by mass or less, or 0.01 parts by mass or more and 1.5 parts by mass or less per 100 parts by mass of the monomer.

The radical polymerization initiator may include, for example, an azo-based compound, a peroxide, or a combination thereof.

Examples of the azo-based compound include 2,2'-azobis[2-(N-phenylamidino)propane]dihydrochloride, 2,2'-azobis{2-[N-(4-chlorophenyl)amidino]propane}dihydrochloride, 2,2'-azobis{2-[N-(4-hydroxyphenyl)amidino propane} dihydrochloride, 2,2'-azobis[2-(N-benzylamidino)propane]dihydrochloride, 2,2'-azobis[2-(N-allylamidino)propane]dihydrochloride, 2,2'-azobis(2-amidinopropane)dihydrochloride, 2,2'-azobis{2-[N-(2-hydroxyethyl)amidino]propane} dihydrochloride, 2,2'-azobis[2-(5-methyl-2-imidazolin-2-yl)propane]dihydrochloride, 2,2'-azobis[2-(2-imidazolin-2-yl)propane]dihydrochloride, 2,2'-azobis[2-(4,5,6,7-tetrahydro-1H-1,3-diazepin-2-yl)propane]dihydrochloride, 2,2'-azobis[2-(5-hydroxy-3,4,5,6-tetrahydropyrimidin-2-yl)propane]dihydrochloride, 2,2'-azobis{2-[1-(2-hydroxyethyl)-2-imidazolin-2-yl]propane }dihydrochloride, 2,2'-azobis(2-methylpropionamide)dihydrochloride, 2,2'-azobis[2-(2-imidazolin-2-yl)propane]disulfate dihydrate, 2,2'-azobis[N-(2-carboxyethyl)-2-methylpropionamidine]tetrahydrate, and 2,2'-azobis[2-methyl-N-(2-hydroxyethyl)propionamide].

Examples of the peroxide include persulfates such as potassium persulfate, ammonium persulfate, and sodium persulfate; organic peroxides such as methyl ethyl ketone peroxide, methyl isobutyl ketone peroxide, di-t-butyl peroxide, t-butyl cumyl peroxide, t-butyl peroxyacetate, t-butyl peroxyisobutyrate, and t-butyl peroxypivalate; and hydrogen peroxide.

The amount of the radical polymerization initiator may be, for example, 0.0001 mol or more and 1 mol or less, 0.0003 mol or more and 0.05 mol or less, 0.0005 mol or more and 0.03 mol or less, or 0.001 mol or more and 0.015 mol or less with respect to 100 mol of the monomers.

Examples of the chain transfer agent include a hypophosphite, a thiol, a thiol acid, a secondary alcohol, and an amine.

Examples of the foaming agent include inorganic foaming agents such as ammonium carbonate, sodium bicarbonate, and ammonium bicarbonate; and organic foaming agents, such as nitroso compounds such as dinitroso pentamethylenetetramine, azo compounds such as azodicarbonamide and azobis(isobutyronitrile), and sulfonyl hydrazide compounds such as 4,4'-oxybisbenzenesulfonyl hydrazide and p-toluenesulfonyl hydrazide.

The reaction solution for reverse phase suspension polymerization can be formed by stirring a mixed solution that includes the prepared aqueous solution and an oil solution which is a hydrophobic liquid mainly formed of a hydrophobic dispersion medium. The reaction solution includes a particulate aqueous solution dispersed in the oily liquid. A particulate hydrogel polymer including a polymer of the monomers and water are formed by a polymerization reaction in the reaction solution.

The reaction solution may include a surfactant. The surfactant may be included in the oily liquid. The surfactant may be a nonionic surfactant or an anionic surfactant. Examples of the nonionic surfactant include sorbitan fatty acid esters, polyglycerin fatty acid esters, sucrose fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkylphenyl ethers, polyoxyethylene castor oil, polyoxyethylene hydrogenated castor oil, alkylallyl formaldehyde condensed polyoxyethylene ethers, polyoxyethylene polyoxypropylene block copolymers, polyoxyethylene polyoxypropyl alkyl ethers, and polyethylene glycol fatty acid esters. Examples of the anionic surfactant include fatty acid salts, alkylbenzene sulfonate, alkylmethyl taurate, polyoxyethylene alkylphenyl ether sulfuric acid ester salts, polyoxyethylene alkyl ether sulfonic acid salts, phosphoric acid esters of polyoxyethylene alkyl ethers, and phosphoric acid esters of polyoxyethylene alkyl allyl ethers. The surfactant may be used alone or in combination with two or more kinds thereof.

The oily liquid in the reaction solution is a hydrophobic liquid mainly formed of a hydrophobic dispersion medium. The dispersion medium may be a hydrocarbon dispersion medium. The oily liquid may further include any additive such as a hydrophobic polymer dispersing agent.

Examples of the hydrocarbon dispersion medium include chain-like aliphatic hydrocarbons such as n-hexane, n-heptane, 2-methylhexane, 3-methylhexane, 2,3-dimethylpentane, 3-ethylpentane, and n-octane; alicyclic hydrocarbons such as cyclohexane, methylcyclohexane, cyclopentane, methylcyclopentane, trans-1,2-dimethylcyclopentane, cis-1,3-dimethylcyclopentane, and trans-1,3-dimethylcyclopentane; and aromatic hydrocarbons such as benzene, toluene, and xylene. The hydrocarbon dispersion medium may be used alone or in combination with two or more kinds thereof.

The amount of the dispersion medium included in the oily liquid may be 30 parts by mass or more and 1000 parts by mass or less, 50 parts by mass or more and 650 parts by mass or less, 70 parts by mass or more and 550 parts by mass or less, or 100 parts by mass or more and 450 parts by mass or less per 100 parts by mass of the monomer.

Examples of the hydrophobic polymer dispersing agent include maleic anhydride-modified polyethylene, maleic anhydride-modified polypropylene, a maleic anhydride-modified ethylene-propylene copolymer, a maleic anhydride-modified ethylene propylene diene terpolymer (EPDM), maleic anhydride-modified polybutadiene, a maleic anhydride-ethylene copolymer, a maleic anhydride-propylene copolymer, a maleic anhydride-ethylene-propylene copolymer, a maleic anhydride-butadiene copolymer, polyethylene, polypropylene, an ethylene-propylene copolymer, oxidized polyethylene, oxidized polypropylene, an oxidized ethylene-propylene copolymer, an ethyleneacrylic acid copolymer, ethyl cellulose, and ethyl hydroxyethyl cellulose. The hydrophobic polymer dispersing agent may be used alone or in combination with two or more kinds thereof.

The amount of the hydrophobic polymer dispersing agent may be 0.05 parts by mass or more and 10 parts by mass or less, 0.08 parts by mass or more and 5 parts by mass or less, or 0.1 parts by mass or more and 3 parts by mass or less per 100 parts by mass of the monomer.

The reaction solution may be heated for the polymerization reaction. The heating temperature for the polymerization reaction may be, for example, 40°C or higher and 90°C or lower. The time of the polymerization reaction may be, for example, 30 minutes or more and 240 minutes or less.

During the polymerization reaction, the reaction solution is usually stirred. The rotation speed for the stirring during the polymerization reaction may be, for example, 200 rpm or more and 1000 rpm or less.

The water-absorbent resin particles including a polymer are recovered from a reaction solution (slurry) including a particulate hydrogel polymer. The recovery of the water-absorbent resin particles from the reaction solution includes, for example, forming a concentrate by extracting a part of water from the reaction solution by azeotropic distillation of the dispersion medium and water, and evaporating the dispersion medium, water, and the alcohol compound included in the aqueous solution from the concentrate. After the removal by evaporation of the dispersion medium and the like, powder of the water-absorbent resin particles including the dried polymer particles can be obtained. Water may remain to some extent in the dried polymer particles (water-absorbent resin particles).

After water is extracted, the polymer particles may be surfacecrosslinked in a mixture including a concentrate including the polymer particles (water-absorbent resin particles) including a polymer, and a surface crosslinking agent.

The surface crosslinking agent may be a compound having two or more reactive functional groups, and examples thereof include polyols such as ethylene glycol, propylene glycol, 1,4-butanediol, trimethylolpropane, glycerin, polyoxyethylene glycol, polyoxypropylene glycol, and polyglycerin; polyglycidyl compounds such as (poly)ethylene glycol diglycidyl ether, (poly)glycerin diglycidyl ether, (poly)glycerin triglycidyl ether, trimethylolpropane triglycidyl ether, (poly)propylene glycol polyglycidyl ether, and (poly)glycerol polyglycidyl ether; haloepoxy compounds such as epichlorohydrin, epibromohydrin, and α-methyl epichlorohydrin; isocyanate compounds such as 2,4-tolylene diisocyanate and hexamethylene diisocyanate; oxetane compounds such as 3-methyl-3-oxetane methanol, 3-ethyl-3-oxetane methanol, 3-butyl-3-oxetane methanol, 3-methyl-3-oxetane ethanol, 3-ethyl-3-oxetane ethanol, and 3-butyl-3-oxetane ethanol; oxazoline compounds such as 1,2-ethylenebisoxazoline; carbonate compounds such as ethylene carbonate; and hydroxyalkylamide compounds such as bis[N,N-di(β-hydroxyethyl)]adipamide. The surface crosslinking agent may include a polyglycidyl compound such as (poly)ethylene glycol diglycidyl ether, (poly)glycerin diglycidyl ether, (poly)glycerin triglycidyl ether, (poly)propylene glycol polyglycidyl ether, and polyglycerol polyglycidyl ether. These surface crosslinking agents may be used alone or in combination with two or more kinds thereof.

The amount of the surface crosslinking agent may be 0.01 mmol or more and 10 mmol or less, 0.03 mmol or more and 3 mmol or less, or 0.05 mmol or more and 1 mmol or less per mole of the monomer units constituting the polymer in the polymer particles.

The mixture may be heated for surface crosslinking. The heating temperature may be, for example, 60°C or higher and 200°C or lower, or 80°C or higher and 150°C or lower. The reaction time of the surface crosslinking reaction may be, for example, 1 minute or more and 300 minutes or less, or 5 minutes or more and 200 minutes or less.

The dispersion medium can be removed from the concentrate to obtain dried polymer particles (water-absorbent resin particles). To this end, the concentrate may be heated.

Various additives may be further added to the dried polymer particles. Examples of the additive include a lubricant, a metal chelating agent, a surface modifying agent, a heat resistance stabilizer, an antioxidant, and an antibacterial agent.

The lubricant may be, for example, amorphous silica particles. Examples of a metal chelating agent include ethylenediaminetetraacetic acid and a salt thereof (disodium ethylenediaminetetraacetate and the like), and diethylenetriaminepentaacetic acid and a salt thereof (pentasodium diethylenetriaminepentaacetate). Examples of the surface modifying agent include polyvalent metal compounds such as aluminum sulfate, potassium alum, ammonium alum, sodium alum, and (poly)aluminum chloride; and hydrates thereof; and polycationic compounds such as polyethyleneimine, polyvinyl amine, and polyallyl amine.

An additive may be attached to the surface of the polymer particles or may have penetrated into the interior of the polymer particles. By adding an additive (for example, a lubricant) to the dried polymer particles, the additive can be attached to the surface of the polymer particles. An additive may be added to a liquid for polymerization or a concentrate after water removal. In the present specification, the water-absorbent resin particles mean particles including polymer particles. The water-absorbent resin particles may include polymer particles and the additive.

The amount of the additive (for example, the lubricant) may be, for example, 0.001 parts by mass or more and 10 parts by mass or less, 0.01 parts by mass or more and 5 parts by mass or less, or 0.1 parts by mass or more and 2 parts by mass or less per 100 parts by mass of the polymer particles.

The water-absorbent resin particles may include spherical primary particles. The primary particles obtained by reverse phase suspension polymerization may form chain-like coarse particles due to a trace amount of impurities and the like included in the aqueous solution, but the formation of the chain-like coarse particles by the spherical primary particles can also be effectively suppressed by controlling the amount of the alcohol compound in the aqueous solution within an appropriate range. The spherical primary particles can be true spherical or substantially spherical. An aspect ratio (major axis diameter/minor axis diameter) of the spherical primary particles may be, for example, 1.0 or more and 1.5 or less.

### [Examples]

The present invention is not limited to the following Examples.

### 1. Production of Water-Absorbent Resin Particles

### Example 1

A round-bottomed cylindrical separable flask having an inner diameter of 11 cm and an internal volume of 2 L equipped with a reflux condenser, a dropping funnel, a nitrogen gas introduction tube, and a stirrer was prepared. A stirrer blade having one stage of four inclined paddle blades with a blade diameter of 5 cm was attached to the stirrer. 283 g of n-heptane as a hydrocarbon dispersion medium and 0.736 g of a maleic anhydride-modified ethylene-propylene copolymer (Mitsui Chemicals, Inc., Hi-Wax 1105A) as a hydrophobic polymeric dispersant were placed in the prepared separable flask. The temperature of the mixture in the separable flask was raised to 80°C while stirring, thereby forming an n-heptane solution including a maleic anhydride-modified ethylene-propylene copolymer. After completion of the stirring, the n-heptane solution was cooled to 56°C.

74.06 g (1.03 mol) of acrylic acid and 0.0074 g of isononyl alcohol were placed in a beaker having an internal capacity of 300 mL. While the beaker was cooled with ice water, 102.8 g of an aqueous sodium hydroxide solution having a concentration of 30% by mass was added dropwise to the beaker to prepare a 75% by mole neutralized product of acrylic acid. Next, 69.0 g of water, 0.0920 g of hydroxyethyl cellulose (AW-15F, manufactured by Sumitomo Seika Chemicals Co., Ltd.) as a thickener, 0.0368 g (0.136 mmol) of potassium persulfate as a radical polymerization initiator, and 0.0101 g (0.058 mmol) of ethylene glycol diglycidyl ether as an internal crosslinking agent were added to a beaker and dissolved to prepare an aqueous solution including acrylic acid and sodium acrylate.

The prepared aqueous solution was added to the n-heptane solution including the anhydrous maleic acid-modified ethylene-propylene copolymer in the separable flask. The mixed solution in the separable flask was stirred for 10 minutes. Next, a surfactant solution including 0.736 g of a sucrose stearic acid ester (RYOTO Sugar Ester S-370, manufactured by Mitsubishi-Chemical Foods Corporation, HLB: 3) as a surfactant and 6.62 g of n-heptane was added to the mixed solution. While stirring the reaction solution formed in the separable flask with a stirrer at a rotation speed of 300 rpm, the inside of the separable flask was sufficiently purged with nitrogen. After the nitrogen purging, the separable flask was immersed in a water bath at 70°C to raise the temperature of the reaction solution, thereby initiating the polymerization reaction. The polymerization reaction was allowed to proceed for 60 minutes while maintaining the stirring, thereby forming a slurry including a hydrogel polymer.

A separable flask into which the slurry had been incorporated was immersed in an oil bath at 125°C. While refluxing n-heptane included in the slurry in the separable flask, 127.5 g of water included in the slurry was extracted to the outside of the separable flask by azeotropic distillation of n-heptane and water. Next, the separable flask was heated in an oil bath at 125°C, and n-heptane and the like were evaporated to obtain 96.2 g of dried water-absorbent resin particles.

### Examples 2 and 3, and Comparative Examples 1 to 3

Water-absorbent resin particles were obtained in the same procedure as in Example 1, except that the alcohol compound (isononyl alcohol, 1-butanol, and isopropyl alcohol) in the amount shown in Table 1 was added instead of 0.0074 g of isononyl alcohol in order to adjust the aqueous solution. The amount of the alcohol compound shown in Table 1 is a ratio (ppm by mass) with respect to the mass of the acrylic acid before neutralization.

### 2. Evaluation of Water-Absorbent Resin Particles

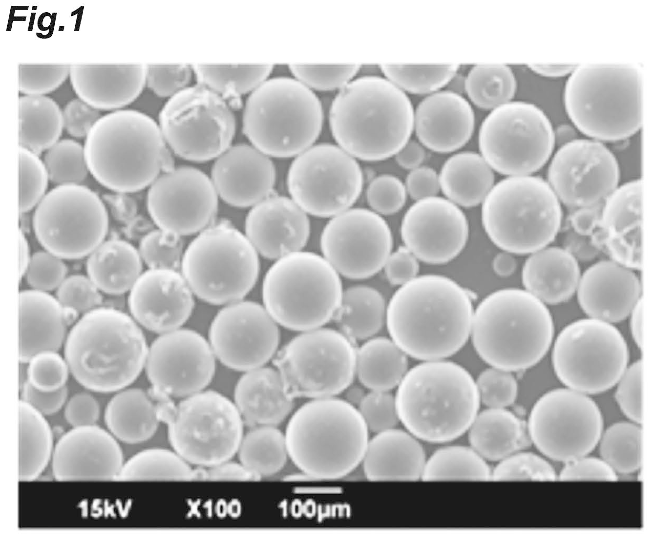

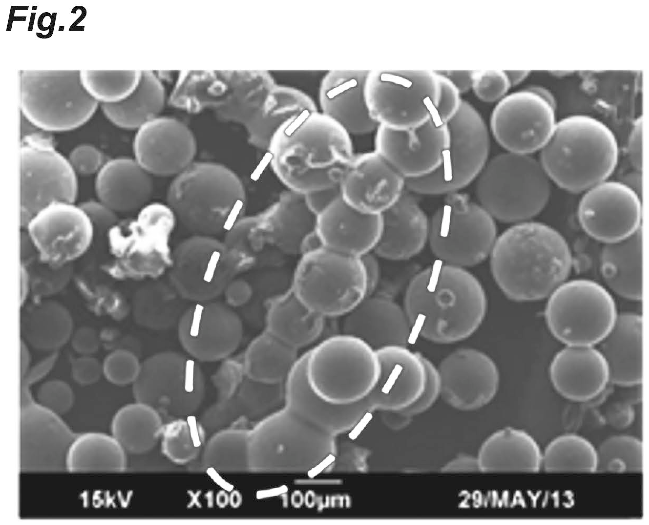

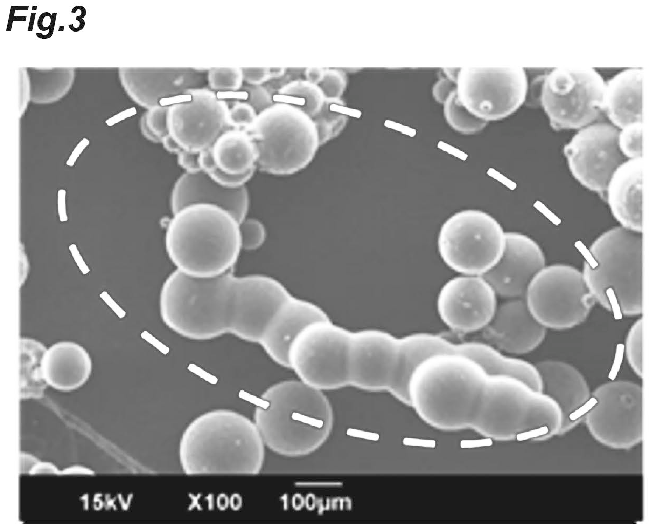

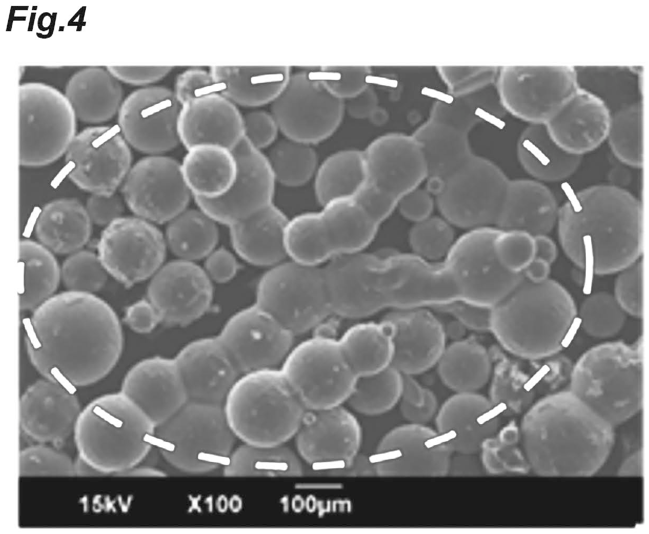

The powder of the water-absorbent resin particles obtained in Examples or Comparative Examples was observed using a scanning electron microscope (SEM), and the presence or absence of chain-like coarse particles formed by the linking of primary particles was confirmed. FIG. 1 is an SEM image of the water-absorbent resin particles of Example 2. FIGS. 2, 3, and 4 are SEM images of the water-absorbent resin particles of Comparative Examples 1, 2, and 3, respectively. The powder of the water-absorbent resin particles of Examples included spherical primary particles, and the formation of chain-like coarse particles due to the aggregation or the linking of the primary particles was not observed. From this result, it was confirmed that the formation of chain-like coarse particles can be suppressed by adjusting the amount of the alcohol compound with respect to the amount of the (meth)acrylic acid compound.

**[Table 1]**

| | Alcohol compound [ppm by mass] | | | Chain-like coarse particles |
|---|---|---|---|---|
| | Isononyl alcohol | 1-Butanol | isopropyl alcohol | |
| Example 1 | 100 | 0 | 0 | Absent |
| Example 2 | 0 | 100 | 0 | Absent |
| Example 3 | 0 | 0 | 100 | Absent |
| Comparative Example 1 | 1000 | 0 | 0 | Present |
| Comparative Example 2 | 0 | 1000 | 0 | Present |
| Comparative Example 3 | 0 | 0 | 1000 | Present |

## Claims

1. A method for producing water-absorbent resin particles, the method comprising:
preparing an aqueous solution that includes monomers including at least one (meth)acrylic acid compound of (meth)acrylic acid or a salt thereof, an alcohol compound having 1 or more and 10 or less carbon atoms, and water;
forming a particulate hydrogel polymer including a polymer of the monomers and water by reverse phase suspension polymerization in a reaction solution including the aqueous solution and a dispersion medium; and
recovering water-absorbent resin particles including the polymer from the reaction solution,
wherein the aqueous solution including the alcohol compound in an amount of 800 ppm by mass or less with respect to an amount of the (meth)acrylic acid compound is prepared, and
in a case where the aqueous solution includes the salt of (meth)acrylic acid, the amount of the (meth)acrylic acid compound is a total amount of an amount of the (meth)acrylic acid and an amount of (meth)acrylic acid corresponding to an amount of substance of the salt.

2. The method according to claim 1, further comprising:
preparing a (meth)acrylic acid raw material that includes (meth)acrylic acid and an alcohol compound having 1 or more and 10 or less carbon atoms and is transported such that an amount of the alcohol compound is 800 ppm by mass or less with respect to an amount of the (meth)acrylic acid,
wherein the aqueous solution is prepared from the (meth)acrylic acid raw material.

3. The method according to claim 1,
wherein the water-absorbent resin particles include spherical primary particles.

4. The method according to any one of claims 1 to 3,
wherein the alcohol compound includes at least one selected from isononyl alcohol, 1-butanol, and isopropyl alcohol.
